# EUROPEAN PATENT SPECIFICATION

(11) **EP 1 880 841 B1**
(45) Date of publication and mention of the grant of the patent: **23.01.2013**
(21) Application number: 06755312.3
(22) Date of filing: 29.03.2006
(51) Int. Cl.: B32B 5/24, B32B 15/08, B32B 15/18, B29C 70/30, B63B 5/00, B32B 15/14, B29C 70/88, B32B 7/12

(54) **FIBRE-METAL HYBRID LAMINATE MATERIAL FOR SHIPBUILDING AND PRODUCTION METHOD THEREOF**
HYBRIDLAMINATMATERIAL AUS FASERMETALL FÜR SCHIFFSBAU UND DESSEN HERSTELLUNGSVERFAHREN
MATERIAU LAMINE HYBRIDE FIBRE-METAL DESTINE A ETRE UTILISE DANS LE DOMAINE DE LA CONSTRUCTION NAVALE ET SON PROCEDE DE FABRICATION

(30) Priority: 01.04.2005 ES 200500746
(43) Date of publication of application: 23.01.2008
(73) Proprietor: Universidad Politécnica de Madrid, 28040 Madrid (ES)
(72) Inventor: SUÁREZ BERMEJO, Juan Carlos Dpto. de Arquitectura y Construccion Navales ETSI Navales Universidad Politecnica de Madrid, 28040 Madrid (ES); MIGUEL ALONSO, Santiago Ensenanzas Basicas ETSI Navales Universidad Politecnica de Madrid, 28040 Madrid (ES); DIEZ DE ULZURRUM ROMEO, Ignacio Dpto. de Arquitectura y Construccion Navales ETSI Navales Universidad Politecnica de Madrid, 28040 Madrid (ES); LÓPEZ MARTÍN, Francisco Dpto. de Ingenieria de Materiales ETSI de Minas Universidad Politecnica de Madrid, 28003 Madrid (ES); PINILLA CEA, Paz Dpto. de Arquitectura y Construccion Navales ETSI Navales Universidad Politecnica de Madrid, 28040 Madrid (ES); HERREROS SIERRA, Miguel Ángel Dpto. de Arquitectura Y Construccion Navales ETSI Navales Universidad Politecnica de Madrid, 28040 Madrid (ES); ILLESCAS MOLINA, José Dpto. de Arquitectura y Construccion Navales ETSI Navales Universidad Politecnica de Madrid, 28040 Madrid (ES); SORIA BARTOLOME , Ana Dpto. de Arquitectura y Construccion ETSI Navales Universidad Politecnica de Madrid, 28040 Madrid (ES); GARCÍA NUNEZ, Ana Dpto. de Arquitectura y Construccion Navales ETSI Navales Universidad Politecnica de Madrid, 28040 Madrid (ES)
(74) Representative: Carvajal y Urquijo, Isabel
(86) International application number: PCT/ES2006/000152
(87) International publication number: WO 2006/103309

(56) References cited:
- EP-A2- 0 412 816
- WO-A1-99/58333
- DE-A1- 19 835 727
- GB-A- 2 061 834
- GB-A- 2 399 544
- US-A- 5 160 771
- US-A- 5 547 735
- US-A1- 2001 053 451
- US-B1- 6 171 705

## Description

### TECHNICAL SECTOR

The technology sector to which this invention belongs is that of Naval Construction and Oceanic Engineering, and particularly the construction techniques of ship structures and marine devices.

### BACKGROUND OF THE INVENTION

There is a need to have new materials for naval construction and oceanic engineering capable of satisfying the design and fabrication requirements for lighter structures that are in turn resistant, permit higher speeds of movement and lower energy consumption. Some current examples are the fast ferries, high-speed containerships, double-hull oil tankers, etc.

Steel, the material traditionally used in the manufacturing of ships and other marine structures, has a series of limitations that impede continued improvement in the line of constructing light, resistant and safe structures. Among the advantages can be cited that it is cheap, easily shaped and machinable, weldable, has very studied and well-known performance and properties, is very tough and impact-resistant. On the other hand, the most severe disadvantages are its high density and the problems of corrosion that it presents.

Other alternative materials have been proposed and used in this industrial sector: steel with a high elastic limit, aluminium alloys and materials composed of polymer matrix. All of them make the structures lighter, by having higher specific resistance than that of steel, but always at the expense of neglecting some other important feature for a material that is to be used in naval applications.

Steels with a high elastic limit are, in general, more difficult to weld and, basically, more prone to fracture. The aluminium alloys contribute the advantage of their lower density with respect to steel, but are also less rigid and, consequently, the savings in weight are not as significant as could be expected; they are also more difficult to weld than steel and present, in addition, problems of corrosion-fatigue. The compound materials used in naval construction (polyester or vinylester matrix, reinforced with fibreglass) are light and resistant, but the manufacturing processes are more labour-intensive and costly; in addition they are very sensitive to damage from impact and can present problems of deterioration of their mechanical properties through water absorption (osmosis).

The fibre-metal hybrid materials intend to increase the advantages of both types of materials, avoiding, as far as possible, their inconveniences. Thus, the high resistance to impact and durability, together with the facility of machining and typical manufacturing of metallic materials is intended to be combined with a specific high resistance and rigidity in the direction of the fibre, as well as good resistance to fatigue, characteristics of the compound materials.

The use of fibre-metal hybrid materials has been proposed previously in different structural applications. The first patents are from the 1960's (US3091262, US3189054) and 1970's (US4029838). The applications were centred especially in the field of aeronautics and therefore the materials used are lightweight aluminium alloys (while in the present invention steel is used) and compound materials of polymer epoxy matrix (in this invention vinylester is used) with different reinforcements, such as carbon, aramid or fibreglass (the exclusive use of fibreglass is proposed in this invention). The first fibre-metal laminates available commercially were made of aramid and aluminium (ARALL®, laminates manufactured by ALCOA). These laminates were designed to improve resistance to the propagation of cracks from fatigue. Successive contributions (US 5227216) have permitted improving some failure modes undesirable in aeronautic applications, where the loads in service are different from those that a ship has to support and, therefore, the configuration of the material that is described in this invention is also different. On other occasions, the interposition of layers that act as a thermal shield in missile components were looked for in the hybrid material, as well as a structural role to support the loads in service (US 5979826, US5824404); these requirements are not necessary in naval construction and, consequently, the compound material of a pre-ceramic matrix is not included in the material subject of this patent. Some applications within the automobile sector can be found (IT1279568, US2002178672), although in these cases the external layers of the laminate are of transparent resin and resistant to environmental degradation, with any pigment or filler that gives them an agreeable aesthetic appearance; in this case, the external layers are of steel in order to take advantage of its capacity to resist impact and the surface finish is provided by means of a painting system normally used in naval construction. More recent patent documents can also be found where the use of this type of materials in less sophisticated applications is included, as can be the design and fabrication of skateboards (US 2004/0188967 A1), although since these are small structures, materials are introduced such as wood and titanium that are not feasible in the construction of large naval and oceanic structures.

As regards the manufacturing techniques, leaving to one side the composition of the hybrid materials, there are different patents that include diverse aspects, as can be the assembly of panels, although in these cases a scheme is followed in which the termination of a metallic layer is followed by a compound material (US5160771), or else a laminate of compound material is used that is continuous over the connection of two metallic laminates (US5951800); in this invention, the manufacturing of panels, either flat or curved, is proposed, with a staircase perimeter fitting the panels together so that they can construct large-sized structures by parts, such as ships and marine devices.

Lastly, there is information available on the use of ceramic moulds (US5149251, US5252160) and matrixes in order to give the necessary curve to the laminates (US3711934). The solution that is proposed is to shape the steel sheets independently and to use these elements as moulds in order to laminate the compound material on them, thus avoiding the construction of specific moulds.

### DESCRIPTION OF THE INVENTION

The fibre-metal hybrid laminated material for naval construction is comprised of steel sheets and laminates of a compound material comprised by a polymer matrix reinforced with fibreglass. The amount, thickness and orientation of each of these sheets and laminates are calculated in order to obtain the appropriate rigidity and resistance in each area of the ship. The composition of the laminate can vary in order to adapt the design material to the structural needs of each area of the ship or marine device. However, it is necessary to abide by a series of premises in the design of the material.

The more external layers will always be of steel. In this way, it takes advantage of its resistance to impact, protecting the compound material that is located in the interior of the sandwich for possible de-lamination and micro-cracking. It also takes advantage of its capacity of supporting higher temperatures that the polymeric matrix of the compound, with a minor loss of mechanical properties and without smoke emission during a possible fire. Inside, other layers of steel can be placed to increase the rigidity of the hybrid material.

The compound material laminates are always situated in the interior of the sandwich formed by the external sheets of steel. The preferred materials are those that have been demonstrating their good performance in marine environments: polyester or vinylester matrix and reinforcement of continuous E-fibreglass. The fibre can be used in the form of fabric or as unidirectional reinforcement, depending on the preferred directions that are to be reinforced according to the principal directions of the stresses in service. The compound material laminates will be grouped in packs with a determined number of layers, always between two steel sheets.

The bond between the sheets and the compound material laminate, within each package of the hybrid material, is done by means of the adhesion capacity of the polymeric resin that makes up the matrix. The bond between the pack of compound material and the metallic sheet material is done by using a structural adhesive. This adhesive is placed, at least, between the most external steel sheets and the first pack of compound material, where the interlaminar stresses can reach high levels. The adhesive must be elastic, have a certain capacity of reversible distortion, in order to absorb the difference of mechanical properties of the metal and the compound during the applied bending stress of the fibre-metal hybrid material without breaking. An adhesive of the bi-component polyurethane type is appropriate for this purpose. However, the thickness of the adhesive layer must be controlled (according to the recommendations of each manufacturer for the type of adhesive selected) in order to adapt to the differences of distortion without reaching excess thicknesses that would cause premature failure of the adhesive bond.

The panels of fibre-metal hybrid laminated material can be flat or curved, in order to be used in different areas of the naval structures and marine devices. In any case, it is essential to assemble the individual panels in order to make the desired structure. For this purpose, the panels are constructed leaving the borders in a staircase form on the four borders, so that the steps of one panel fit into those of the neighbouring panel. An elastic adhesive is applied to bond to panels together. The glued surface, which is the surface of the assembled steps, must be sufficient to guarantee a perfect transmission by shearing of the loads from one panel to another. The exact dimensions of these steps, from 2 to 20 centimetres, are calculated based on the dimensions of the panels and the expected loads in service. The assembly adhesive must have, therefore, a certain capacity to fill holes and to be able to absorb in this way the manufacturing tolerances.

Once the assembly of the panels is done, it is necessary to seal the connections that are on the outside, on both surfaces of the hybrid laminate, and in lengthwise and crosswise directions. These connections contribute to the transfer of loads between panels but, above all, serve to impede the entrance of water in the interior of the laminate. The sealing can be done in two ways; either welding the steel sheets together or else using a polymeric sealant. In the case of welding, one must take into account that metal must be provided to fill the hollow between the two sheets, trying to penetrate as little as possible so as not to damage the polymeric material that is found below. In the case of using a polymeric sealant, one will be chosen with the capacity to fill the hollows and support the relative movement between the two sheets without producing faults. The sealant must impede the entrance of water in the interior of the material during the structure's service lifetime.

Once the panels are assembled, they can be painted, following the usual procedures in naval construction and oceanic engineering, in order to protect the structure from the phenomena of corrosion.

### BRIEF DESCRIPTION OF THE DRAWINGS

For a better description of what is presented in this report, some drawings are attached that, just as an example, represent a practical case of a manufacturing and assembly procedure of a fibre-metal hybrid laminated material for naval construction.

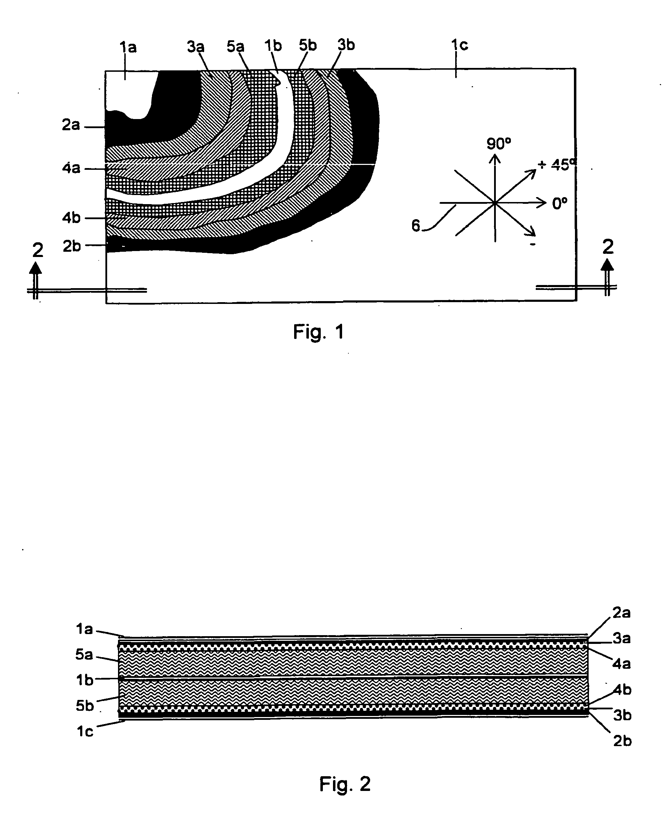

In Figure 1, the lamination sequence is shown, where each of the layers of the hybrid material are left uncovered in order to be able to observe the different materials used, the way they face, and the use of adhesive to bond some layers with others.

A slice of figure 1 is shown in figure 2, where the sequence of piling the layers is observed. In this particular case, it deals with a laminate comprised of three steel sheets and two packs of compound material, each formed by three individual laminates with different configurations and placement.

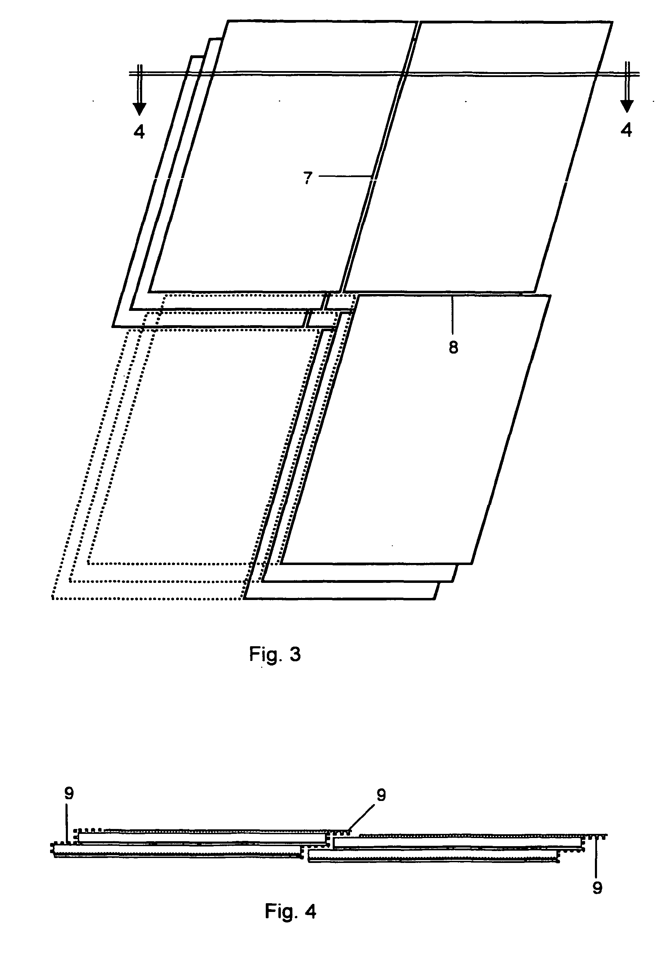

Figure 3 shows the assembly of four panels. One of them is shown as transparent in order to be able to observe the horizontal placement of the layers with respect to the others, in each panel, forming a three-step staircase. The steps of one panel fit into those of the next one so that two connections never coincide with one under the other.

A section of figure 3 is shown in figure 4, where the assembly of the steps and their bond with a structural adhesive can be observed.

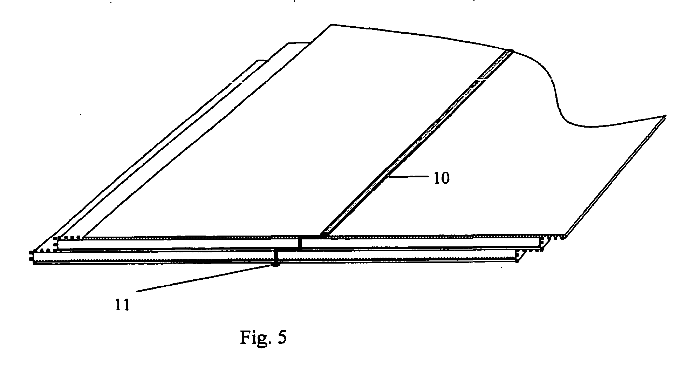

Figure 5 illustrates the sealing process of the external bonds, on both sides of the laminate, either by welding or by the use of a polymeric sealant. A lengthwise bond is shown in this figure, but it is completely analogous to the bond in the crosswise direction of the panel.

### DESCRIPTION OF A PREFERRED EXECUTION

The fibre-metal hybrid laminated material for naval construction in question is comprised of two external steel sheets (1a and 1c), with the possibility of including one or more intermediate steel sheets (1b). The steel sheets can be flat or have the precise curvature for each specific application. It is possible to make panels without curvature, with curvature in a single direction or with double curvature; therefore, there is no restriction as regards the geometry of the panel. The procedure for giving shape to the steel sheets is not dealt with in this report, as there exist numerous methods available (presses, bending machines, heat lines, etc.) depending on the thickness of the sheet.

The steel sheets must then be subjected to a superficial preparation treatment. There are different treatments that prepare the surface of the steel in order to improve the effectiveness of the adhesive bonds. It is not the subject of this report to detail these treatments. However, an appropriate procedure, as an example, is the cleaning with an organic solvent in the steam phase, followed by a treatment in a hot bath of phosphoric acid and ending with cleaning with deionised water.

A primer coat is applied to the steel sheet surfaces (1a and ic) to strengthen the adhesion between the metal and the layer of adhesive that will then be applied. The nature of the primer depends on the type of adhesive that is going to be used and, in each case, on the adhesive manufacturer's recommendation as the most appropriate primer. The primer is only applied to the internal surfaces (towards the interior of the laminate) of the steel skin (1a and 1c), which will be laminated; on the intermediate steel sheet or sheets (1b) it is not necessary to apply the primer, although, possibly, it can also be applied to improve the adherence between the metal and the polymeric resin that constitutes the matrix of the compound laminated material. In no case shall the primer be applied to the external surfaces of the steel skin (1a and 1c), since it is possible that a different surface preparation is needed for them to be painted later.

A layer of paste adhesive (2a) is deposited on the first steel sheet (1a), spreading its evenly over the entire surface of the steed with the primer already applied. The most appropriate adhesive is one of an elastic type, that is capable of adapting to the different mechanical properties of the steel and of the compound material that will be laminated on it. The adhesive itself must have sufficient resistance to support the distortions to which it will be subjected without failing. A bi-component polyurethane adhesive is an appropriate election, as long as the minimum and maximum thicknesses recommended by the manufacturer are respected, according to the rheology of the product. The adhesive layers play an essential role in the overall performance of the final hybrid material; if these adhesive layers, of an elastic nature and with the manufacturer's recommended thickness to absorb the distortion difference between layer and layer are not introduced, failure of the bond between the two materials may occur. The adhesive acts as a transition element and when distorted it adapts to the distortions of the metal sheets and of the compound material (1a and 3a), easing the interlaminar strain that is produced on the bond of both materials when they are subjected to bending/compression stress in service, avoiding or postponing the failures by local buckling that would occur in such case.

On the steel sheet with the primer and the adhesive, the compound material begins to be laminated. The steel sheet (la), either flat or with the curvature that has been given to it, serves as a mould for the placement of the successive layers of compound material, with which no additional equipment is needed to fabricate the laminate, as is usual in the execution of conventional compound materials. One only needs some auxiliary elements for the precise placement of the laminates and to hold them in position -acting as stoppers- during the curing and consolidation process of the polymeric matrix, but not an actual mould.

The compound material matrix and reinforcement will be those that are ideal for the specific application of the panel within the structure. Specifically, for applications in naval construction and oceanic engineering, materials that have already demonstrated their suitability for the marine environment. In this sense, a matrix of vinylester resin and a reinforcement of E-fibreglass have been chosen. The reinforcement is used dry, placed on the steel sheet that acts as a mould and is soaked in the resin *in situ.* The E-fibreglass reinforcement is used as a fabric or as a single-directional reinforcement. In this latter case, a reference system on the panel itself (6) will permit placing the fibres correctly according to the principal stresses that must be supported during service.

The first laminate that is placed (3a) is a single-directional reinforcement at -45°, followed by another (4a) at +45°. The objectives of these two layers is to introduce a preferred reinforcement in the direction where the maximum shearing strain is during the service life of the structure, due to the torsional stress on the panel. However, the sequence of specific lamination must be studied for each application, according to the distribution of the stresses expected on each area of the structure.

You continue with one or more laminates of balanced fabric (5a) -equal number of strips in the direction of the weft as in the warp- in order to give the panel the desired thickness according to the rigidity that one wants to reach. The procedure to incorporate each new laminate is always the same: place the dry reinforcement, appropriately set in the correct direction, and impregnate it with resin uniformly and completely. Halfway through the hybrid laminate, a steel sheet (1b) is inserted. Having reached this point, it is advisable to place a weight on the steel sheet, uniformly distributed, or apply pressure on it by means of some other procedure (vacuum bagging, autoclave), in order to compact the pack of compound material that has just been laminated and eliminate the excess resin that may have been introduced -bleeding it from the edges of the panel.

From the central layer (1b), after compacting, you continue laminating symmetrically until reaching the upper steel skin (5b, 4b, 3b, 2b and 1c). In this way, you have a balanced and symmetrical hybrid laminate, comprised of three steel sheets and two packs of compound material interspersed between the sheets. This configuration must be understood as a particular case that presents all the peculiarities of the proposed hybrid material but does not exhaust all the possible configurations and sequences of lamination since the advantages of this material is rooted, precisely, in the possibility of adapting its design to the precise requirements of each structural application.

In order to execute the assembly of the panels and construct with them the final structure, each panel constructed individually, either flat or curved, is laminated having a series of staircases on the borders. Figures 3 and 4 show how each new steel laminate is moved horizontally and vertically, on the plane of the laminate, a certain distance. On this new position of the steel sheet, lamination is continued. The final result is a stairway with three steps, on the four borders of the panel, and each step will have a height equal to each pack of compound material plus the thickness of each steel sheet. Each panel can be assembled with four other panels fitting together the staircases of the respective borders. On the outside two connections will appear: one longitudinal bond (7) that is not continuous, since each contiguous panel is moved in that direction so that the connection line does not coincide; a crosswise connection line (8) that is continuous. This form of assembling the panels permits ensuring that the connections between panels in each layer (in the direction of the thickness) do not coincide and, therefore, reducing the risk of a failure of a bond being passed to the entire thickness of the hybrid laminate.

The panels assembled in the way explained above are glued by an adhesive (9) that does not have to coincide with that used in the fabrication of each panel. An adhesive that admits greater thicknesses is preferred, so that it is capable of filling the hollows between the two panels, absorbing in this way the tolerances of fabrication. A polyurethane-based adhesive, monocomponent, is an appropriate candidate. The length of the overlap area, from 2 to 20 centimetres according to the dimensions of the panel and the maximum expected stresses, makes possible that the transmission of loads between consecutive panels is effective and that it permits its flow throughout the entire structure without failures in the bonding.

The last stage consists of the sealant of the outside connection lines, both lengthwise and crosswise, in order to impede the entry of water to the interior of the hybrid laminate. The sealing will be done on the two surfaces of the panel (10 and 11), whether it is flat or curved. It does not deal with structural connections, since its mission is not the transfer of loads between parts (a task that the adhesive connections of the internal overlaps carry out), but rather simply the sealing of the connection line. This operation can be executed in two ways: applying a polymeric sealant or by means of a weld bead.

If a polymeric sealant is applied, the desired characteristics are its resistance to the entry of water in the connection and the chemical compatibility with the other polymers used in the hybrid material. It is also possible to use the adhesive that was used in the assembly of the panels.

In case of using a weld bead as the process for sealing the external connection, a welding process should be chosen that has little heat input since it could damage the matrix of the compound and the adhesive of the assembly. These polymeric materials resist temperatures far below those needed to melt steel. A very scant penetration of the bead and a minimum heat input, therefore, are necessary so that the temperatures reached by the polymer are as low as possible. Thermal degradation to a certain degree is unavoidable, however, in the area of the glued overlap, so that it will be necessary to oversize this overlap in the event that the panels were to be welded later. The only advantage that the welded bond presents compared to the use of a polymeric seal is that the bead has greater stability and resistance to the entry of water, as all the material visible from the exterior is steel.

### INDUSTRIAL APPLICATION

This invention can be applied in naval construction and oceanic engineering, in particular in the construction techniques of the ship structures and marine devices.

## Claims

1. Fibre-metal hybrid laminated material for its use in naval construction and marine devices, that is alternately comprised of steel and compound material with vinylester or polyester matrix and fibreglass reinforcement, situating the steel sheet on the outside layers of the laminate and the compound material in the interior, and introducing an elastic-type adhesive between the exterior steel layers and the first layers of compound laminated material on the steel.

2. Fibre-metal hybrid laminated material, as in claim 1, **characterised** because intermediate layers of steel can be added between layers of the compound material.

3. A fibre-metal hybrid laminated material, as in claims 1 and 2, **characterised** because the fibreglass reinforcement used in the compound material can be used in the form of fabric, in a single direction or both directions combined.

4. A fibre-metal hybrid laminated material, as in claims 1 to 3, **characterised** because the adhesive used is a polyurethane bi-component.

5. A manufacturing process of the material of the above claims that is comprised of the following stages:
a. the steel surface is prepared by means of commercial chemical treatment, for the application of adhesives, applying a layer of primer on the internal surface of the first steel sheet,
b. a layer of elastic-type adhesive is applied on the interior part of the first steel sheet and then the material compound of polymeric resin and fibreglass reinforcement is laminated, moving each layer in order to form a profile in a staircase shape, being able to introduce intermediate steel laminates between the compound material,
c. the last steel sheet, with primer and adhesive on the inside surface, is then placed, applying pressure to compact the layers and the laminate is left to dry,
d. elastic adhesive is applied on the staircase perimeter and a panel is assembled with the contiguous panel, fitting the steps together,
e. the external connections of the steel sheets are sealed, above and below.

6. The process of claim 5 **characterised** because the steel sheets are cut and shaped by plastic distortion in order to give them the curvature that is required for each panel, flat or curved, in order to be used as moulds on which the compound material is laminated.

7. The processes of claims 5 and 6 **characterised** because each steel sheet is moved horizontally and vertically with respect to the compound material that it has below in order to form a staircase profile in each of the four borders of the panels of fibre-metal hybrid material, that will later be assembled with other panels by means of overlapping and gluing these staircase borders, with the dimensions of the steps being between 2 and 20 centimetres.

8. The processes of the claims 5 to 7 **characterised by** the use of a polyurethane mono-component adhesive for the assembly of the panels.

9. The processes of claims 5 to 8 **characterised** because the sealing of the lengthwise and crosswise external union lines of the panels of the fibre-metal hybrid material is done either by beads of polymeric sealant or by welding beads with or without contribution of material.

10. Use of the laminated material and of the process described in the previous claims for their use in the techniques for constructing ship structures and marine devices.

## Patentansprüche

1. Laminiertes Faser-Metall-Hybridmaterial zur Verwendung im Schiffbau und in maritimen Einrichtungen, das abwechselnd aus Stahl und einem Verbundmaterial mit einer Vinylester- oder Polyestermatrix und einer Glasfaserverstärkung besteht, wobei die Stahlfolie auf den äußeren Schichten des Laminats und das Verbundmaterial im Innern angeordnet werden und ein elastischer Klebstoff zwischen die äußeren Stahlschichten und die ersten Schichten des laminierten Verbundmaterials auf dem Stahl eingefügt wird.

2. Laminiertes Faser-Metall-Hybridmaterial nach Anspruch 1, **dadurch gekennzeichnet, dass** Zwischenschichten aus Stahl zwischen die Schichten des Verbundmaterials hinzugefügt werden können.

3. Laminiertes Faser-Metall-Hybridmaterial nach den Ansprüchen 1 und 2, **dadurch gekennzeichnet, dass** die im Verbundmaterial eingesetzte Glasfaserverstärkung in Form eines Gewebes in einer Richtung oder in beiden Richtungen kombiniert eingesetzt werden kann.

4. Laminiertes Faser-Metall-Hybridmaterial nach den Ansprüchen 1 bis 3, **dadurch gekennzeichnet, dass** der eingesetzte Klebstoff ein Bikomponenten-Polyurethan ist.

5. Verfahren zur Herstellung des Materials der oberen Ansprüche, das folgende Schritte umfasst:
a. Die Stahloberfläche wird durch eine handelsübliche chemische Behandlung für das Auftragen von Klebstoffen vorbereitet, indem eine Grundierungsschicht auf die Innenfläche der ersten Stahlfolie aufgetragen wird,
b. auf den inneren Teil der ersten Stahlschicht wird eine Schicht eines elastischen Klebstoffs aufgetragen und danach wird das aus Polymerharz und Glasfaserverstärkung zusammengesetzte Material laminiert, wobei jede Schicht verschoben wird, um ein stufenförmiges Profil zu erzeugen, und wobei Zwischenlaminate aus Stahl in das Verbundmaterial eingefügt werden können,
c. danach wird die letzte Stahlschicht mit der Grundierung und dem Klebstoff auf der Innenfläche angeordnet, wobei zum Verpressen der Schichten Druck ausgeübt wird und das Laminat getrocknet wird,
d. auf den stufenförmigen Umfang wird elastischer Klebstoff aufgetragen, und eine Platte wird mit der angrenzenden Platte zusammengebaut, indem die Stufen zusammengesetzt werden,
e. die äußeren Verbindungen der Stahlfolien werden oben und unten abgedichtet.

6. Verfahren nach Anspruch 5, **dadurch gekennzeichnet, dass** die Stahlfolien zerschnitten und durch plastisches Verformen geformt werden, um ihnen die für jede Platte erforderliche flache oder gekrümmte Krümmung zu verleihen und sie als Form zu verwenden, auf der das Verbundmaterial laminiert wird.

7. Verfahren nach den Ansprüchen 5 und 6, **dadurch gekennzeichnet, dass** jede Stahlfolie horizontal und vertikal in Bezug auf das darunterliegende Verbundmaterial verschoben wird, um ein stufenförmiges Profil an jedem der vier Ränder der Platten aus Faser-Metall-Hybridmaterial zu erzeugen, die später durch Überlappung und Verkleben dieser stufenförmigen Ränder mit anderen Platten zusammengebaut werden, wobei die Abmessungen der Stufen 2 bis 20 Zentimeter betragen.

8. Verfahren nach den Ansprüchen 5 bis 7, **gekennzeichnet durch** die Verwendung eines Einkomponenten-Polyurethan-Klebstoffs zum Zusammenbau der Platten.

9. Verfahren nach den Ansprüchen 5 bis 8, **dadurch gekennzeichnet, dass** die Abdichtung der längs und quer verlaufenden äußeren Verbindungslinien der Platten aus Faser-Metall-Hybridmaterial entweder mittels Perlen eines Polymer-Dichtstoffs oder mittels Schweißperlen mit oder ohne Materialeinbringung erfolgt.

10. Verwendung des laminierten Materials und des Verfahrens nach den vorangegangenen Ansprüchen zur Verwendung in der Bautechnik für Schiffstrukturen und maritime Einrichtungen.

## Revendications

1. Matériau stratifié hybride en fibre-métal destiné à la construction navale et aux équipements marins, constitué de couches alternatives d'acier et de matériau composite en résine vinylester ou comprenant une matrice d'enrobage en polyester et fibre de verre, la tôle mince en acier se trouvant sur les couches extérieures du matériau stratifié et le matériau composite se trouvant à l'intérieur, un adhésif de type élastique, étant placé entre, les couches d'acier extérieures et les premières couches du matériau composite stratifié.

2. Matériau stratifié hybride en fibre-métal, conformément à la revendication 1, **caractérisé en ce que** les couches intermédiaires d'acier peuvent être placées entre les couches de matériau composite.

3. Un matériau stratifié hybride en fibre-métal, conformément aux revendications 1 et 2, **caractérisé en ce que** l'enrobage en fibre de verre utilisé dans le matériau composite peut servir de matrice, dans un sens ou dans les deux sens à la fois.

4. Un matériau stratifié hybride en fibre-métal, conformément aux revendications allant de 1 à 3, **caractérisé en ce que** l'adhésif utilisé est du polyuréthane à deux composants.

5. Un procédé de fabrication du matériau mentionné dans les revendications ci-dessus comprenant les étapes suivantes :
a. la surface en acier est préparée au moyen d'un traitement chimique commercial pour l'application de l'adhésif, une couche d'amorce étant appliquée sur la surface intérieure de la première tôle mince en acier,
b. une couche d'adhésif de type élastique est appliquée sur la partie intérieure de la première tôle mince en acier, le matériau composite en résine polymérique avec enrobage en fibre de glace est ensuite stratifié, chaque couche étant placée de sorte à former un profilé en forme d'escalier, permettant d'introduire l'acier laminé à l'intérieur du matériau composite,
c. la dernière tôle mince en acier, dont la surface intérieure a été enduite d'une couche d'amorce et d'un adhésif, est ensuite placée en exerçant une pression pour comprimer les couches; le matériau stratifié est alors mis à sécher,
d. un adhésif élastique est appliqué sur le périmètre de l'escalier et les deux panneaux contigus sont assemblés ensemble de sorte à emboiter les escaliers,
e. les connections externes des tôles minces en acier sont scellés, au-dessus et en dessous.

6. Le procédé conformément à la revendication 5, **caractérisé en ce que** les tôles minces en acier sont découpées et mises en forme par un procédé de déformation qui donne la courbure requise à chaque panneau, forme plate ou courbée, de sorte à ce qu'elles puissent faire office de moule pour la stratification du matériau composite.

7. Les procédés conformément aux revendications 5 et 6, **caractérisés en ce que** chaque tôle mince en acier est placée horizontalement ou verticalement par rapport au matériau composite qui se trouve en dessous, de sorte à former un profilé en forme d'escalier au niveau de chacun des quatre bordures des panneaux en matériau hybride en fibre-métal, les bordures des escaliers sont par la suite montés sur d'autres panneaux suivant un procédé d'assemblage par recouvrement et d'encollage, les dimensions des marches étant situées en 2 et 20 centimètres.

8. Les procédés conformément aux revendications allant de 5 à 7, **caractérisés en ce que** l'on utilise un adhésif à un seul composant en polyuréthane pour l'assemblage des panneaux.

9. Les procédés conformément aux revendications allant de 5 à 8, **caractérisés en ce que** le scellage des lignes de raccord extérieures dans le sens de la longueur et dans le sens de la largeur des panneaux en matériau hybride en fibre-métal est effectué à l'aide d'un produit de scellement polymérique à base de perles de verre ou en soudant les perles de verre, avec ou sans utilisation d'un autre matériau.

10. L'utilisation du matériau stratifié et des procédés décrits dans les revendications précédentes pour servir les techniques de construction des structures de navire et des équipements marins.
